# EUROPÄISCHE PATENTSCHRIFT

(11) **EP 1 512 698 B1**
(45) Veröffentlichungstag und Bekanntmachung des Hinweises auf die Patenterteilung: **13.09.2006**
(21) Anmeldenummer: 04019262.7
(22) Anmeldetag: 13.08.2004
(51) Int. Cl.: C08F 2/20, C08F 12/34, C08F 12/36

(54) **Verfahren zur Herstellung nicht-mikroverkapselter monodisperser Perlpolymerisate**
Process for the preparation of non-microencapsulated monodisperse bead polymers
Procédé de préparation de polymères en perles non microencapsulés monodispersés

(30) Priorität: 26.08.2003 DE 10339569
(43) Veröffentlichungstag der Anmeldung: 09.03.2005
(73) Patentinhaber: LANXESS Deutschland GmbH, 51369 Leverkusen (DE)
(72) Erfinder: Feistel, Lothar, 04509 Delitzsch (DE); Seidel, Rüdiger, Dr., 06792 Sandersdorf (DE); Mittag, Hubertus, Dr., 06766 Wolfen (DE); Schade, Gerold, Dr., 06849 Dessau (DE); Podszun, Wolfgang, Dr., 51061 Köln (DE); Schmid, Claudia, Dr., 42799 Leichlingen (DE)

(56) Entgegenhaltungen:
- DE-A- 10 050 391
- DE-A- 19 757 669
- US-A- 4 623 706
- US-A- 6 020 385

## Beschreibung

Die Erfindung betrifft ein Verfahren zur Herstellung nicht-mikroverkapselter monodisperser Perlpolymerisate durch Polymerisation monodisperser mikroverkapselter Monomertröpfchen.

In jüngerer Zeit haben Ionenaustauscher mit möglichst einheitlicher Teilchengröße (im folgenden "monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können. Monodisperse Ionenaustauscher können durch Funktionalisieren von monodispersen Perlpolymerisaten erhalten werden. Eine der Möglichkeiten, monodisperse Perlpolymerisate herzustellen, besteht darin, durch Verdüsung von Monomeren in eine kontinuierliche Phase monodisperse Monomertröpfchen zu erzeugen und diese dann durch Polymerisation auszuhärten. Die Ausbildung einheitlicher Tröpfchengrößen kann durch Schwingungsanregung unterstützt werden. So wird in der EP 0 051 210 B1 ein Verfahren zur Herstellung kugelförmiger Monomertröpfchen mit einheitlicher Teilchengröße durch Schwingungsanregung eines laminaren Monomerstroms beschrieben. Soll die Monodispersität der Monomertröpfchen bei der Polymerisation erhalten bleiben, muss die Koaleszenz sowie die Neubildung von Tröpfchen ausgeschlossen werden. Eine besonders wirksame Methode zur Verhinderung von Koaleszenz und Neubildung von Tröpfchen besteht in der Mikroverkapselung der Tröpfchen gemäß EP 0 046 535 B1. Die Mikroverkapselung der Monomertröpfchen hat mehrere Vorteile. Durch diese Maßnahme bleibt die eingestellte Teilchengröße und Teilchengrößenverteilung erhalten und die Polymerisation ist hinsichtlich der Rührbedingungen und Temperaturführung sehr robust. Auch ist dieses Verfahren besonders gut zur Herstellung von makroporösen Perlpolymerisaten anwendbar.

Die Polymerisation von mikroverkapselten Monomertröpfchen führt zu Perlpolymerisaten die ihrerseits mikroverkapselt sind, da die Kapselwand bei der Polymerisationsreaktion erhalten bleibt. Für viele Anwendungen sind mikroverkapselte Perlpolymerisate gut geeignet. So können z.B. mikroverkapselte Styrol-Divinylbenzol-Perlpolymerisate durch Sulfonierung in starksaure Kationenaustauscher überführt werden. Auch Saat-Zulauf Polymerisationsreaktionen, sogenannte Seed-Feed-Polymerisationsreaktionen, sind mit mikroverkapselten Saaten prinzipiell möglich. Ein derartiges Verfahren wird beispielsweise in der EP 0 826 704 B 1 beschrieben.

Bei den Seed-Feed-Verfahren mit mikroverkapselten Saaten hat sich allerdings gezeigt, dass die Kapselwand eine Diffusionsbarriere darstellt, wodurch das Einquellen des zugesetzten Feedes in die Saat verlangsamt wird.

Darüber hinaus gibt es Einsatzgebiete, wie z.B. Adsorberharze oder Trägerharze für Wirkstoffe, bei denen eine Kapselwand unerwünscht ist.

Aufgabe der vorliegenden Erfindung war daher ein Verfahren zur Herstellung von monodispersen nicht-mikroverkapselten Perlpolymerisaten aus mikroverkapselten Monomertröpfchen bereitzustellen.

Es wurde nun gefunden, dass monodisperse nicht-mikroverkapselte Perlpolymerisate in einfacher Weise erhalten werden können, wenn im Laufe der Polymerisation starke Säuren oder starke Laugen zugesetzt werden.

Gegenstand der vorliegenden Erfindung ist ein Verfahren zur Herstellung nicht-mikroverkapselter monodisperser Perlpolymerisate durch Polymerisation von monodispersen mikroverkapselten Monomertröpfchen in wässriger Dispersion, welches dadurch gekennzeichnet ist, dass der Dispersion während der Polymerisation starke Säuren oder starke Laugen zugesetzt werden.

Die Erfindung betrifft ein Verfahren zur Herstellung nicht-mikroverkapselter monodisperser Perlpolymerisate, dadurch gekennzeichnet, dass man
a) eine wässrige Suspension aus
   i) mikroverkapselten monodispersen Monomertröpfchen enthaltend Monomer, Vernetzer und Radikalbildner und
   ii) Dispergiermittel
   herstellt,
b) die Polymerisation durch Temperaturerhöhung auf Temperaturen, bei denen der Radikalbildner aktiv ist, einleitet,
c) bis zu einem Polymerisationsumsatz von 20 bis 98 % polymerisiert,
d) starke Säuren oder starke Laugen zugibt,
e) die Polymerisation vervollständigt und
f) das entstandene nicht-mikroverkapselte monodisperse Perlpolymerisat isoliert.

Die Erfindung betrifft ferner nicht-mikroverkapselte monodisperse Perlpolymerisate, erhältlich durch
a) Herstellen einer wässrigen Suspension aus
   i) mikroverkapselten monodispersen Monomertröpfchen enthaltend Monomer, Vernetzer und Radikalbildner und
   ii) Dispergiermittel,
b) Einleiten der Polymerisation durch Temperaturerhöhung auf Temperaturen, bei denen der Radikalbildner aktiv ist,
c) Polymerisieren bis zu einem Polymerisationsumsatz von 20 bis 98 %,
d) Zugabe von starken Säuren oder starken Laugen,
e) Vervollständigen der Polymerisation und
f) Isolieren des entstandenen nicht-mikroverkapselten monodispersen Perlpolymerisats.

Als monodispers werden in der vorliegenden Anmeldung solche Perlpolymerisate bezeichnet, bei denen mindestens 90 Volumen- oder Massen-% der Teilchen einen Durchmesser besitzen, der in dem Intervall mit der Breite von ± 10 % des häufigsten Durchmessers um den häufigsten Durchmesser herum liegt.

Zum Beispiel bei einem Perlpolymerisat mit häufigstem Durchmesser von 250µm liegen mindestens 90 Volumen- oder Massen-% in einem Größenintervall zwischen 225µm und 275 µm, bei einem Stoff mit häufigstem Durchmesser von 300µm liegen mindestens 90 Volumen- oder Massen-% in einem Größenintervall zwischen 330µm und 270µm.

Die erfindungsgemäß hergestellten monodispersen Perlpolymerisate können direkt oder über die Zwischenstufe durch ein Saat/Zulauf-Verfahren vergrößerter Polymerisatteilchen durch Funktionalisierung in Ionenaustauscher überführt werden.

Die Wirkung der Zerstörung der Mikroverkapselung lässt sich durch das veränderte Quellverhalten charakterisieren. Weiterhin macht sich der Effekt im Feedverhalten bemerkbar. Während jedes mikroverkapselte Styrol-Divinylbenzol-Kopolymerisat durch ein charakteristisches Feedverhältnis, bestimmt durch den Vernetzergehalt, beschrieben werden kann, verändert das nicht-mikroverkapselte Perlpolymerisat seine Eigenschaften zu Gunsten eines höheren Feedverhältnisses. Dieses Verhalten bringt in der Praxis ökonomische Vorteile. Ein weiterer Vorteil des erfindungsgemäßen Verfahrens besteht in der Möglichkeit in der wässrigen Dispersion, in der aus den mikroverkapselten monodispersen Monomertröpfchen nicht-mikroverkapselte monodisperse Perlpolymerisate hergestellt wurden, eine Insitu-Feedung durchzuführen. Ein solcher Schritt bringt erhebliche technische Vorteile. Er ist ohne Laugebehandlung nicht möglich. Die Erfindung betrifft deshalb die Verwendung der erfindungsgemäß hergestellten nicht-mikroverkapselten monodispersen Perlpolymerisate zur Herstellung von Ionenaustauschern nach einem Seed/feed-Verfahren (Saatzulaufverfahren) bzw. einem Insitu-seed/feed-Verfahren. Ein weiterer Vorteil der erfindungsgemäß hergestellten nicht-mikroverkapselten monodispersen Polymerisate besteht darin, dass durch Funktionalisierung daraus Kationenaustauscher oder Anionenaustauscher hergestellt werden können, wobei Letztere überraschenderweise bei Anwendung in einem Mischbett ein außerordentlich verbessertes Mischbettverhalten aufweisen.

Setzt man beim Herstellungsprozess Porogene zu, so erhält man nicht-mikroverkapselte monodisperse Perlpolymerisate, die sich aufgrund der wegen des Porogens auftretenden Porenstruktur hervorragend als Adsorber eignen.

Die mikroverkapselten Monomertröpfchen enthalten erfindungsgemäß Monomere, Vernetzer, Radikalbildner und gegebenenfalls Porogene.

Erfindungsgemäß einzusetzende Monomere sind Verbindungen mit einer polymerisierbaren C=C-Doppelbindung. Erfindungsgemäß bevorzugte Monomere sind beispielsweise Styrol, Vinyltoluol, Ethylstyrol, α-Methylstyrol, Chlorstyrol, Chlormethylstyrol, Acrylsäure, Methacrylsäure, Acrylsäureester, Methacrylsäureester, Acrylnitril, Methacrylnitril, Acrylamid, Methacrylamid und Mischungen dieser Verbindungen.

Erfindungsgemäß werden besonders bevorzugt Styrol oder Mischungen aus Styrol und den vorgenannten Monomeren eingesetzt.

Vernetzer im Sinne der vorliegenden Erfindung sind Verbindungen mit mindestens 2, vorzugsweise 2 oder 3 polymerisierbaren C=C-Doppelbindungen. Bevorzugte Vernetzer im Sinne der vorliegenden Anmeldung sind beispielsweise Divinylbenzol, Divinyltoluol, Trivinylbenzol, Divinylnaphthalin, Trivinylnaphthalin, Diethylenglykoldivinylether, 1,7-Octadien, 1,5-Hexadien, Ethylenglykoldimethacrylat, Triethylenglykoldimethacrylat, Trimethylolpropantrimethacrylat, Allylmethacrylat und Methylen-N,N'-bisacrylamid. Die Art der Vernetzer kann im Hinblick auf die spätere Verwendung des Polymerisats ausgewählt werden. So sind beispielsweise Acrylat- bzw. Methacrylat-Vemetzer wenig geeignet, wenn aus dem Polymerisat ein Kationenaustauscher durch Sulfonierung hergestellt werden soll, da die Esterbindung unter den Sulfonierungsbedingungen gespalten wird. Divinylbenzol ist in vielen Fällen, insbesondere auch zur Herstellung stark saurer Kationenaustauscher, geeignet. Für die meisten Anwendungen sind kommerzielle Divinylbenzolqualitäten, die neben den Isomeren des Divinylbenzols auch Ethylvinylbenzol enthalten, ausreichend.

Die erfindungsgemäß einzusetzenden Vernetzer werden im allgemeinen in. Mengen von 0,1 bis 50 Gew.-%, vorzugsweise 0,5 bis 20 Gew.-%, besonders bevorzugt 1 bis 15 Gew.-%, bezogen auf die Summe von Monomer und Vernetzer, eingesetzt. Die Monomeren sollen in der wässrigen Phase weitgehend unlöslich sein. In Wasser teilweise lösliche Monomere wie Acrylsäure, Methacrylsäure und Acrylnitril werden daher vorzugsweise im Gemisch mit wasserunlöslichen Monomeren verwendet. Es ist auch möglich, die Löslichkeit der Monomeren in der wässrigen Phase durch Salzzusatz zu erniedrigen.

Als erfindungsgemäß einzusetzende Radikalbildner kommen beispielsweise Peroxyverbindungen wie Dibenzoylperoxid, Dilaurylperoxid, Bis(p-chlorbenzoylperoxid), Dicyclohexylperoxydicarbonat, tert.-Butylperoctoat, 2,5-Bis(2-ethylhexanoylperoxy)-2,5-dimethylhexan oder tert.-Amylperoxy-2-etylhexan, des weiteren Azoverbindungen wie 2,2'-Azobis(isobutyronitril) oder 2,2'-Azobis(2-methylisobutyronitril) in Frage. Gut geeignet sind auch aliphatische Peroxyester, wie beispielsweise tert.-Butylperoxyisobutyrat, tert.-Butylperoxypivalat, tert.-Butylperoxy-2-ethylhexanoat, tert.-Butylperoxyneodecanoat, tert.-Amylperoxy-2-ethylhexanoat, tert.-Amylperoxyneodecanoat, 2,5-Bis(2-ethylhexanoylperoxy)-2,5-dimethylhexan, 2,5-Dipivaloyl-2,5-dimethylhexan oder 2,5-Bis(2-neodecanoylperoxy)-2,5-dimethylhexan.

Die Radikalbildner werden im allgemeinen in Mengen von 0.01 bis 2.5 Gew.-%, vorzugsweise 0.1 bis 1.5 Gew.%, bezogen auf die Mischungen aus Monomer und Vernetzer angewendet. Selbstverständlich können auch Mischungen der vorgenannten Radikalbildner eingesetzt werden, beispielsweise Mischungen von Radikalbildnern mit unterschiedlicher Zerfallstemperatur.

Die mikroverkapselten monodispersen Monomertröpfchen i) können sogenannte Porogene enthalten, insbesondere dann, wenn man Adsorber erhalten möchte. Diese Porogene erzeugen im nicht-mikroverkapselten monodispersen Polymerisat eine makroporöse Struktur. Hierfür sind in erster Linie organische Lösungsmittel geeignet, die das erfindungsgemäß herzustellende nicht-mikroverkapselte monodisperse Polymerisat nicht quellen lässt. Beispielhaft seien genannt Hexan, Oktan, Isooktan, Isododecan, Methylethylketon, Hexanol oder Oktanol. Es ist aber auch möglich, organische Lösungsmittel zu verwenden, die gute Quellungsmittel sind, wie z.B. Toluol. In diesem Fall lassen sich besonders feine Poren erzeugen. Die Menge des gegebenenfalls erfindungsgemäß einzusetzenden Porogens beträgt im allgemeinen 20 bis 100 Gew.-%, vorzugsweise 40 bis 90 Gew.-% bezogen auf die Summe von Monomer und Vernetzer.

Die Herstellung der erfindungsgemäß in Verfahrensschritt a) einzusetzenden Monomertröpfchen ist bereits aus dem Stand der Technik, beispielsweise EP 0 046 535 B 1 bekannt, deren Inhalt von der vorliegenden Anmeldung mit umfasst wird.

Für die Mikroverkapselung der Monomertröpfchen kommen die für diesen Einsatzzweck bekannten Materialien in Frage, insbesondere Polyester, natürliche oder synthetische Polyamide, Polyurethane, Polyhamstoffe. Als natürliches Polyamid ist Gelatine besonders gut geeignet. Diese kommt insbesondere als Koazervat oder Komplexkoazervat zur Anwendung. Unter gelatinehaltigen Komplexkoazervaten im Sinne der vorliegenden Erfindung werden vor allem Kombinationen von Gelatine und synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid oder Methacrylamid. Gelatinehaltige Kapseln können mit üblichen Härtungsmitteln wie beispielsweise Formaldehyd oder Glutardialdehyd gehärtet werden. Die Verkapselung von Monomertröpfchen beispielsweise mit Gelatine, gelatinehaltigen Koazervaten oder gelatinehaltigen Komplexkoazervaten, wird beispielsweise in EP 0 046 535 B1 eingehend beschrieben. Die Methoden der Verkapselung mit synthetischen Polymeren sind ebenfalls dem Fachmann bekannt. Gut geeignet ist beispielsweise die Phasengrenzflächenkondensation, bei der eine im Monomertröpfchen gelöste Reaktivkomponente (z.B. ein Isocyanat oder ein Säurechlorid) mit einer zweiten in der wässrigen Phase gelösten Reaktivkomponente (z.B. einem Amin) zur Reaktion gebracht wird. Die Mikroverkapselung mit gelatinehaltigem Komplexkoazervat ist bevorzugt.

Die mittlere Teilchengröße der im erfindungsgemäßen Verfahren einzusetzenden verkapselten Monomertröpfchen beträgt vorzugsweise 10 bis 1.000 µm, insbesondere 100 bis 800 µm.

Die im Verfahrensschritt a) der vorliegenden Erfindung einzusetzenden Dispergiermittel, auch als Schutzkolloide bezeichnet, sind natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Methacrylsäure oder (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Bei der Polymerisation von mit Gelatine oder gelatinehaltigen Komplexkoazervaten verkapselten Monomertröpfchen ist auch Gelatine als Schutzkolloid gut geeignet. Die Einsatzmenge der Schutzkolloide beträgt im allgemeinen 0,025 bis 1,5 Gew.-%, vorzugsweise 0,05 bis 0,75 Gew.-%, bezogen auf die wässrige Phase.

Die in den Verfahrensschritten b) und c) durchzuführende Polymerisation der verkapselten Monomertröpfchen zum kugelförmigen nicht-mikroverkapselten Polymerisat kann gegebenenfalls die Anwesenheit eines Puffersystems in der wässrigen Phase erfordern.

Erfindungsgemäß bevorzugt werden Puffersysteme, die den pH-Wert der wässrigen Phase zu Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphate oder Borate. Die Begriffe Phosphat und Borat im Sinne der Erfindung umfassen auch die Kondensationsprodukte der ortho-Formen entsprechender Säuren und Salze. Die Konzentration an Phosphat bzw. Borat in der wässrigen Phase beträgt 0,5 bis 500 mmol/l, vorzugsweise 2,5 bis 100 mmol/l.

Die Rührgeschwindigkeit bei der Polymerisation im Verfahrensschritt c) ist wenig kritisch und hat im Gegensatz zur herkömmlichen Perlpolymerisation keinen Einfluss auf die Teilchengröße. Es werden niedrige Rührgeschwindigkeiten angewendet, die ausreichen, die Mikrokapseln in Schwebe zu halten und die Abführung der Polymerisationswärme zu unterstützen.

Das Volumenverhältnis von verkapselten Monomertröpfchen zu wässriger Phase beträgt im allgemeinen 1:0,75 bis 1:20, vorzugsweise 1:1 bis 1:6.

Die Polymerisationstemperatur der Verfahrensschritte b) bzw. c) richtet sich nach der Zerfallstemperatur des eingesetzten Radikalbildners. Sie beträgt im allgemeinen 50 bis 150°C, vorzugsweise 55 bis 100°C. Die Polymerisation dauert 0,5 bis einige Stunden. Es hat sich bewährt, ein Temperaturprogramm anzuwenden, bei dem die Polymerisation bei niedriger Temperatur, z.B. 60°C, begonnen und mit fortschreitendem Polymerisationsumsatz die Reaktionstemperatur gesteigert wird. Auf diese Weise lässt sich beispielsweise die Forderung nach sicherem Reaktionsverlauf und hohem Polymerisationsumsatz sehr gut erfüllen.

Noch während der Polymerisation werden der wässrigen Suspension bzw. Dispersion starke Säuren oder starke Laugen zugesetzt. Geeignete Laugen im Sinne der vorliegenden Erfindung sind in erster Linie Natriumhydroxid oder Kaliumhydroxid, geeignete Säuren sind Salzsäure oder Schwefelsäure. Die Laugen bzw. Säuren können als wässrige Lösungen, beispielsweise mit einem Gehalt von 5 bis 50 Gew.-% eingesetzt werden. Die Menge an Laugen bzw. Säuren wird so gewählt, dass in der wässrigen Phase eine Konzentration an Lauge bzw. Säure von 0,1 bis 5 Gew.-% erreicht wird.

Die Zugabe der Lauge oder Säure zur wässrigen Polymerisation erfolgt gemäß Verfahrensschritt d) nach erreichen des Gelpunktes. Als Gelpunkt wird in diesem Zusammenhang der Umsatz im Laufe der Polymerisation bezeichnet, bei dem zumindest ein Teil des gebildeten Polymerisates ein das gesamte Kapselvolumen einnehmendes Polymemetzwerk bildet. Der Gelpunkt hängt u.a. vom Vemetzergehalt ab und liegt bei einer üblichen Copolymerisation von Styrol und Divinylbenzol bei 3 bis 15 % Umsatz. Erfindungsgemäß erfolgt die Zugabe der Lauge oder Säure bei einem Polymerisationsumsatz von 20 bis 98 %, vorzugsweise von 40 bis 95 %.

Der Polymerisationsumsatz kann durch Probennahme und Analyse der Proben, beispielsweise durch Gaschromatographie, während der Polymerisationsreaktion bestimmt werden. Es ist ebenso möglich und für die praktische Durchführung einfacher, den Polymerisationsumsatz über den Wärmefluss zu ermitteln.

Nach Zugabe der starken Säuren oder starken Laugen vervollständigt man die Polymerisation durch weiteres Erhitzen auf 60-150°C, vorzugsweise 70-130°C über einen Zeitraum von 0,5 bis 5 h (Verfahrensschritt e)).

Nach der Polymerisation kann das Polymerisat mit üblichen Mitteln, z.B. durch Filtrieren oder Dekantieren, isoliert und gegebenenfalls nach ein oder mehreren Wäschen getrocknet werden (Verfahrensschritt f)).

Die erhaltenen nicht-mikroverkapselten monodispersen Perlpolymerisate zeigen die gleiche Teilchengrößenverteilung wie die mikroverkapselten monodispersen Monomertröpfchen. Eine Verschlechterung der Monodispersität findet überraschenderweise nicht statt.

Die durch das erfindungsgemäße Verfahren erfolgende Entfernung der Kapselwand während der Polymerisation hat wesentliche Vorteile gegenüber einer anschließenden Entfernung nach erfolgter Polymerisation. Es können kürze Zykluszeiten erreicht werden, da ein zusätzlicher Arbeitsschritt entfällt. Überraschenderweise wurde bei den experimentellen Arbeiten gefunden, dass auch die Energiebilanz günstiger ist, da im erfindungsgemäßen Verfahren die Polymerisationswärme genutzt wird.

Zudem wurde gefunden, dass die Entfernung der Hülle vollständiger ist gegenüber einer Entfernung der Kapselwand nach erfolgter Polymerisation, da der durch Pfropfreaktion am Polymernetzwerk fixierte Hüllenanteil geringer ist.

Es darf als überraschend angesehen werden, dass der Vorteil der Mikroverkapselung, nämlich der Erhalt der Teilchengrößenverteilung auch dann voll erhalten bleibt, wenn die Kapselhülle während der Polymerisation entfernt wird.

Die Prozentangaben der nachfolgenden Beispiele beziehen sich jeweils auf das Gewicht.

### Beispiele

### Beispiel 1

### Herstellung eines nicht-mikroverkapselten monodispersen Perlpolymerisates aus mikroverkapselten monodispersen Monomertröpfchen

In einem 4 L - Planschliffgefäß (L = Liter) mit Gitterrührer, Kühler, Temperaturfühler sowie Thermostat und Temperaturschreiber wird eine wässrige Vorlage aus 440,4 g VE-Wasser, 1,443 g Gelatine, 0,107 g Resorcin und 0,721 g wasserfreies Dinatriumhydrogenphosphat erzeugt (VE-Wasser = vollentsalztes Wasser). Zu dieser Vorlage wird unter Rühren mit 150 U/min (Umdrehungen pro Minute) ein Gemisch aus 500g Wasser und 500g mikroverkapselten monodispersen Monomertröpfchen einer einheitlichen Teilchengröße von 235 µm zugesetzt, wobei die mikroverkapselten monodispersen Monomertröpfchen aus einem Kapselinhalt von 99 Gew.-Teilen Styrol, 1 Gew.-Teil Divinylbenzol und 0,5 Gew. Teilen tert.Butylperoxy-2-ethylhexanoat als Initiator (Radikalbildner) und einer Kapselwand aus einem mit Formaldehyd gehärteten Komplexkoazervat aus Gelatine und einem Acrylamid/Acrylsäure-Copolymerisat bestehen. Es wird nun 8 Stunden auf 75°C erhitzt, wobei ein kalorimetrisch ermittelter Polymerisationsumsatz von 88 % erzielt wird. Danach werden 128,55 g 50 %ige Natronlauge über einen Tropftrichter innerhalb von 15 min zugesetzt. Zur Vervollständigung des Umsatzes wird auf 95°C aufgeheizt und bei dieser Temperatur zwei Stunden gehalten und dann abgekühlt. Der Ansatz wird über ein 32 µm-Sieb gewaschen und getrocknet. Man erhält 485 g eines nicht-mikroverkapselten monodispersen Polymerisats mit einer einheitlichen Teilchengröße von 230 µm.

### Beispiel 2

### Herstellung eines nicht-mikroverkapselten monodispersen Perlpolymerisats aus mikroverkapselten monodispersen Monomertröpfchen

In einem 4 L - Planschliffgefäß mit Gitterrührer, Kühler, Temperaturfühler sowie Thermostat und Temperaturschreiber wird eine wässrige Vorlage aus 440,4 g VE-Wasser, 1,443 g Gelatine, 0,107 g Resorcin und 0,721 g wasserfreies Dinatriumhydrogenphosphat erzeugt. Zu dieser Vorlage wird unter Rühren mit 150 U/min ein Gemisch aus 500g Wasser und 500g mikroverkapselten monodispersen Monomertröpfchen einer einheitlichen Teilchengröße von 235 µm zugesetzt, wobei die mikroverkapselten monodispersen Monomertröpfchen aus einem Kapselinhalt aus 99 Gew.-Teilen Styrol, 1 Gew.-Teil Divinylbenzol und 0,5 Gew. Teilen tert. Butylperoxy-2-ethylhexanoat als Initiator (Radikalbildner) und einer Kapselwand aus einem mit Formaldehyd gehärteten Komplexkoazervat aus Gelatine und einem Acrylamid/Acrylsäure-Copolymerisat bestehen. Es wird nun 6 Stunden auf 75°C erhitzt, wobei ein Polymerisationsumsatz von 65 % erzielt wird. Danach werden 60,1 g 50 %ige Schwefelsäure über einen Tropftrichter innerhalb von 15 min zugesetzt. Zur Vervollständigung des Umsatzes wird weitere 2 Stunden bei 75°C gehalten, dann auf 95°C aufgeheizt 2 weitere Stunden bei 95°C gehalten und dann abgekühlt. Der Ansatz wird über ein 32 µm-Sieb gewaschen und getrocknet. Man erhält 488 g eines monodispersen, Polymerisats mit einer Teilchengröße von 230 µm.

### Beispiel 3

### Herstellung eines nicht-mikroverkapselten monodispersen Perlpolymerisates aus mikroverkapselten monodispersen Monomertröpfchen

In einem 4 L - Planschliffgefäß mit Gitterrührer, Kühler, Temperaturfühler sowie Thermostat und Temperaturschreiber wird eine wässrige Vorlage aus 440,4 g VE-Wasser, 1,443 g Gelatine, 0,107 g Resorcin und 0,721 g wasserfreies Dinatriumhydrogenphosphat erzeugt. Zu dieser Vorlage wird unter Rühren mit 150 U/min ein Gemisch aus 500g Wasser und 500g mikroverkapselten monodispersen Monomertröpfchen einer einheitlichen Teilchengröße von 330 µm zugesetzt, wobei die mikroverkapselten monodispersen Monomertröpfchen aus einem Kapselinhalt aus 96 Gew.-Teilen Styrol, 4 Gew.-Teilen Divinylbenzol und 0,5 Gew. Teilen tert.Butylperoxy-2-ethylhexanoat als Initiator (Radikalbildner) und einer Kapselwand aus einem mit Formaldehyd gehärteten Komplexkoazervat aus Gelatine und einem Acrylamid/Acrylsäure-Copolymerisat bestehen. Es wird nun 7 Stunden auf 75°C erhitzt, wobei ein kalorimetrisch ermittelter Polymerisationsumsatz von 90 % erzielt wird. Danach werden 85 g 50 %ige Natronlauge über einen Tropftrichter innerhalb von 15 min zugesetzt. Zur Vervollständigung des Umsatzes wird auf 95°C aufgeheizt und bei dieser Temperatur zwei Stunden gehalten und dann abgekühlt. Der Ansatz wird über ein 32 µm-Sieb gewaschen und getrocknet. Man erhält 483 g eines monodispersen, Polymerisats mit einer Teilchengröße von 325 µm.

### Beispiel 4

### Herstellung eines nicht-mikroverkapselten monodispersen makroporösen Perlpolymerisates aus mikroverkapselten monodispersen Monomertröpfchen

In einem 4 L - Planschliffgefäß mit Gitterrührer, Kühler, Temperaturfühler sowie Thermostat und Temperaturschreiber wird eine wässrige Vorlage aus 440,4 g VE-Wasser, 1,443 g Gelatine, 0,107 g Resorcin und 0,721 g wasserfreies Dinatriumhydrogenphosphat erzeugt. Zu dieser Vorlage wird unter Rühren mit 150 U/min ein Gemisch aus 500g Wasser und 500g mikroverkapselten monodispersen Monomertröpfchen einer einheitlichen Teilchengröße von 380 µm zugesetzt, wobei die mikroverkapselten monodispersen Monomertröpfchen aus einem Kapselinhalt aus 94 Gew.-Teilen Styrol, 6 Gew.-Teil Divinylbenzol, 64 Gew.-Teilen Isododecan als Porogen und 0,5 Gew. Teilen tert.Butylperoxy-2-ethylhexanoat als Initiator (Radikalbildner) und einer Kapselwand aus einem mit Formaldehyd gehärteten Komplexkoazervat aus Gelatine und einem Acrylamid/Acrylsäure-Copolymerisat bestehen. Es wird nun 6 Stunden auf 73°C erhitzt, wobei ein Polymerisationsumsatz von 85 % erzielt wird. Danach werden 60,17 g 50 %ige Natronlauge über einen Tropftrichter innerhalb von 15 min zugesetzt. Zur Vervollständigung des Umsatzes wird auf 95°C aufgeheizt und bei dieser Temperatur zwei Stunden gehalten und dann abgekühlt. Der Ansatz wird über ein 32 µm-Sieb gewaschen und im Vakuum bei 80°C 24Stunden getrocknet. Man erhält 290 g eines monodispersen, macroporösen Polymerisats.

### Beispiel 5 (Vergleichsversuch)

### Herstellung eines mikroverkapselten monodispersen Perlpolymerisats aus mikroverkapselten monodispersen Monomertröpfchen

In einem 4 L - Planschliffgefäß mit Gitterrührer, Kühler, Temperaturfühler sowie Thermostat und Temperaturschreiber wird eine wässrige Vorlage aus 440,4 g VE-Wasser, 1,443 g Gelatine, 0,107 g Resorcin und 0,721 g wasserfreies Dinatriumhydrogenphosphat erzeugt. Zu dieser Vorlage wird unter Rühren mit 150 U/min ein Gemisch aus 500g Wasser und 500g mikroverkapselten monodispersen Monomertröpfchen einer einheitlichen Teilchengröße von 235 µm zugesetzt, wobei die mikroverkapselten monodispersen Monomertröpfchen aus einem Kapselinhalt aus 99 Gew.-Teilen Styrol, 1 Gew.-Teil Divinylbenzol und 0,5 Gew. Teilen tert.Butylperoxy-2-ethylhexanoat als Initiator (Radikalbildner)und einer Kapselwand aus einem mit Formaldehyd gehärteten Komplexkoazervat aus Gelatine und einem Acrylamid/Acrylsäure-Copolymerisat bestehen. Es wird nun 8 Stunden auf 75°C und zwei weitere Stunden auf 95°C erhitzt und dann abgekühlt. Der Ansatz wird über ein 32 µm-Sieb gewaschen und getrocknet. Man erhält 488 g eines monodispersen, Polymerisates mit einer Teilchengröße von 230 µm.

### Beispiel 6

### Überprüfung der Quellungskinetik

In einem 1 L - Rührgefäß werden 300 g VE-Wasser, 1,2g Borsäure und 0,3 g Natriumhydroxid vorgelegt und jeweils 100g Polymerisat aus den Beispielen 1, 2 und 5 unter Rühren mit 150 Upm zugesetzt. Danach wird bei 25°C ein Monomergemisch aus 238,3 g Styrol, 20 g Acrylnitril, 41,7 g Divinylbenzol (80 %) über einen Zeitraum von 30 min zugetropft. Unmittelbar nach der Zugabe des Monomergemisches und danach in Abständen von 30 Min wurden Proben entnommen und die Menge des in das Polymerisat eingequollenen Monmergemisches aus der Volumenzunahme ermittelt.

**Menge des eingequollenen Monomergemisches**

| Polymer | aus Beispiel 1 | aus Beispiel 2 | aus Beispiel 5 |
|---|---|---|---|
| Nach Zugabe des Monomergemisches | 96 % | 90 % | 22 % |
| 30 min Quellzeit | 100 % | 100 % | 48 % |
| 60 min Quellzeit | 100 % | 100 % | 70 % |
| 90 min Quellzeit | 100 % | 100 % | 86 % |
| 120 min Quellzeit | 100 % | 100 % | 92 % |
| 150 min Quellzeit | 100 % | 100 % | 96 % |

Der Versuch zeigt die überragend bessere Quellungskinetik erfindungsgemäß hergestellter nicht-mikroverkapselter monodisperser Perlpolymerisate im Vergleich zu einem nicht erfindungsgemäß hergestellten mikroverkapselten monodispersen Perlpolymerisat.

### Beispiel 7

### Überprüfung der Saat-Zulauf-Polymerisation

In einem 4 L - Planschliffgefäß mit Gitterrührer, Kühler, Temperaturfühler sowie Thermostat und Temperaturschreiber werden 1100 g VE-Wasser, 3,6g Borsäure und 1 g Natriumhydroxid vorgelegt und jeweils 300g Perlpolymerisat aus den Beispielen 1, 2 und 5 unter Rühren mit 340 Upm zugesetzt. Danach wird bei 25°C ein Monomergemisch aus 715 g Styrol, 60 g Acrylnitril, 125 g Divinylbenzol (80 %) und 7,2 g Dibenzoylperoxyd über einen Zeitraum von 30 min zugetropft. Nach der Zugabe wird im Falle der Perlpolymerisate aus den Beispielen 1 und 2 noch 30 min. im Falle von Beispiel 5 noch 2,5 Stunden bei 25°C gerührt. Danach wird eine Lösung von 2,4g Methylhydroxyethylcellulose in 120g VE-Wasser zugesetzt und der Gasraum mit Stickstoff gespühlt. Der Ansatz wird nun 10 Stunden auf 63°C und dann 2 Stunden auf 95°C aufgeheizt. Nach dem Abkühlen wird die erhaltene Suspension über einem 200 µm Sieb gewaschen und das Produkt bei 80°C über Nacht im Trockenschrank getrocknet und ausgewogen. Zur Ermittlung der Ausbeute wird die Auswage um die Menge des eingesetzten Saat-Polymerisates vermindert und durch die Menge des Monomergemisches dividiert.

| Polymer | aus Beispiel 1 | aus Beispiel 2 | aus Beispiel 5 |
|---|---|---|---|
| Ausbeute der Saat-Zulauf Polymerisation | 97 % | 96 % | 88 % |

Auch im Seed/feed-Verfahren zur Herstellung beispielsweise von Ionenaustauschern zeigt sich die deutliche Überlegenheit nicht-mikroverkapselter monodisperser Perlpolymerisate.

### Beispiel 8

### Herstellung eines nicht mikroverkapselten Feed-Polymerisates aus mikroverkapselten Monomertröpfchen

In einem 4 L - Planschliffgefäß mit Gitterrührer, Kühler, Temperaturfühler sowie Thermostat und Temperaturschreiber wird eine wässrige Vorlage aus 880 g VE-Wasser, 2,89 g Gelatine, 0,22 g Resorcin und 1,44 g wasserfreies Dinatriumhydrogenphosphat erzeugt. Zu dieser Vorlage wird unter Rühren mit 150 U/min ein Gemisch aus 500 g Wasser und 380g mikroverkapselten monodispersen Monomertröpfchen einer einheitlichen Teilchengröße von 235 µm zugesetzt, wobei die mikroverkapselten monodispersen Monomertröpfchen aus einem Kapselinhalt aus 99 Gew.-Teilen Styrol, 1 Gew.-Teil Divinylbenzol und 0,5 Gew. Teilen tert.Butylperoxy-2-ethyl-hexanoat als Initiator (Radikalbildner) und einer Kapselwand aus einem mit Formaldehyd gehärteten Komplexkoazervat aus Gelatine und einem Acrylamid/Acrylsäure-Copolymerisat bestehen. Es wird nun 8 Stunden auf 75°C erhitzt, wobei ein kalorimetrisch ermittelter Polymerisationsumsatz von 88 % erzielt wird. Danach werden 90 g 50 %ige Natronlauge über einen Tropftrichter innerhalb von 15 min zugesetzt. Zur Vervollständigung des Umsatzes wird auf 95°C aufgeheizt und bei dieser Temperatur zwei Stunden gehalten und dann abgekühlt. Anschließend wird mit 127,7 g Salzsäure (32 %) innerhalb von 60 Minuten neutralisiert. Danach werden 912,8 g Feedphase bestehend aus 737,8 g Styrol, 119,8g Divinylbenzol (80 %), 48,3 g Acrylnitril und 6,9 g Benzoylperoxid (75 %) über einen Zeitraum von 30 Min. dosiert.Bei einer Umdrehung von 210 U/min. wird 60 Min. nachgerührt. Anschließend werden 91g einer 2 %igen Methylhydroxyethylcelluloslösung dosiert. Innerhalb von 90 Min. wird auf 63°C geheizt und 480 Min. bei dieser Temperatur gerührt. Danach wird innerhalb von 60 Min. auf 95°C geheizt und 120 Min. bei dieser Temperatur gehalten und dann abgekühlt.

### Der Ansatz wird gewaschen und getrocknet. Man erhält 1145 g eines monodispersen

Polymerisates mit einer Teilchengröße von 390 µm.

### Beispiel 9

### Herstellung eines nicht-mikroverkapselten Feedpolymerisates aus mikroverkapselten Monomertröpfchen mit erhöhtem Feedfaktor

In einem 4 L - Planschliffgefäß mit Gitterrührer, Kühler, Temperaturfühler sowie Thermostat und Temperaturschreiber wird eine wässrige Vorlage aus 900 g VE-Wasser, 2,96 g Gelatine, 0,22 g Resorcin und 4,44 g Dinatriumhydrogenphosphat •12Wasser erzeugt. Zu dieser Vorlage wird unter Rühren mit 150 U/min ein Gemisch aus 720g Wasser und 1016 g mikroverkapselten Monomertröpfchen einheitlicher Teilchengröße von 400 µm zugesetzt, wobei die mikroverkapselten Monomertröpfchen aus einem Kapselinhalt aus 95 Gew.-Teilen Styrol, 5 Gew.-Teilen Divinylbenzol und 0,5 Gew. Teilen tert.Butylperoxy-2-ethylhexanoat als Initiator und einer Kapselwand aus einem mit Formaldehyd gehärteten Komplexkoazervat aus Gelatine und einem Acrylamid/Acrylsäure-Copolymerisat bestehen. Es wird nun 8 Stunden auf 75°C erhitzt, wobei ein kalorimetrisch ermittelter Polymerisationsumsatz von 92 % erzielt wird. Danach werden 99 g 50 %ige Natronlauge über einen Tropftrichter innerhalb von 15 min während des Aufheizens zugesetzt. Zur Vervollständigung des Umsatzes wird auf 95°C aufgeheizt und bei dieser Temperatur zwei Stunden gehalten und dann abgekühlt. Der Ansatz wird über ein 32 µm-Sieb gewaschen und getrocknet. Man erhält 916 g eines monodispersen, Polymerisats mit einer Teilchengröße von 370 µm.

In der gleichen Polymerisationsapparatur erfolgt die Feedpolymerisation mit einem Feedverhältnis wie es ohne die Oberflächenbehandlung nicht möglich ist.

Es wird eine wässrige Phase vorgelegt, bestehend aus 550g entsalztem Wasser, 1,79 g Borsäure und 0,49g Natriumhydroxid, und 20 Minuten gerührt. In diese Lösung werden bei 220 U/min 290 g Saat der ersten Polymerisation dispergiert. Zu dieser Dispersion wird eine Feedphase von 362,5 g (entspricht einem Feedverhältnis von 1,25) bestehend aus 292,5 g Styrol, 43,9 g Divinylbenzol 80 %ig, 26,1 g Acrylnitril und 1,17g tert.-Butylperoxy-2-ethylhexanoat über einen Zeitraum von 30 Min. dosiert und 120 Min. nachgerührt. Anschließend werden 65 ml einer 2 %igen Methylhydroxyethylcelluloselösung hinzugefügt. Innerhalb von 45 Min. wird auf 63°C geheizt und 600 Min. bei dieser Temperatur gehalten. Danach wird innerhalb von 60 Min. auf 95°C geheizt und 240 Min. bei dieser Temperatur gehalten und dann abgekühlt.

Der Ansatz wird gewaschen und getrocknet. Man erhält 605 g eines monodispersen Polymerisates mit einer Teilchengröße von 470 µm.

### Beispiel 10

### Herstellung eines nicht mikroverkapselten Polymerisates aus mikroverkapselten Monomertröpchen

In einem 4 Liter Planschliffgefäß mit Gitterrührer, Kühler, Temperaturfühler sowie Thermostat und Temperaturschreiber wird eine wässrige Vorlage aus 440,4 g vollentsalztem Wasser, 1,3443 g Gelatine, 0,107 g Resorcin und 0,721 g wasserfreies Dinatriumhydrogenphosphat erzeugt. Zu dieser Vorlage wird unter Rühren mit 150 U/min ein Gemisch aus 500 g Wasser und 500 g mikroverkapselten Monomertröpfchen einer einheitlichen Teilchengröße von 430 µm zugesetzt, wobei die mikroverkapselten Monomertröpfchen aus einem Kapselinhalt von 95 Gew.-Teilen Styrol, 5 Gew.-Teilen Divinylbenzol und 0,5 Gew.-Teilen tert.-Butylperoxy-2-ethylhexanonat als Initiator und einer Kapselwand aus einem mit Formaldehyd gehärteten Komplexkoazervat aus Gelatine und einem Acrylamid/Acrylsäure-Copolymerisat bestehen. Es wird nun 6,5 Stunden auf 75°C erhitzt, wobei ein kalorimetrisch ermittelter Polymerisationsumsatz von 89 % erzielt wird. Danach werden 128,55 g 50 %ige Natronlauge über einen Tropftrichter innerhalb von 15 min zugesetzt. Zur Vervollständigung des Umsatzes wird auf 95°C aufgeheizt und bei dieser Temperatur zwei Stunden gehalten und dann abgekühlt. Der Ansatz wird über ein 32 µm-Sieb gewaschen und getrocknet. Man erhält 487 g eines monodispersen, Polymerisats mit einer Teilchengröße von 425 µm.

### Beispiel 11 (Vergleichsversuch)

### Herstellung eines mikroverkapselten Polymerisates aus mikroverkapselten Monomertröpfchen

Beispiel 10 wurde wiederholt mit dem Unterschied, dass keine Natronlauge zugesetzt wird. Man erhält 482 g eines monodispersen Polymerisats mit einer Teilchengröße von 425 µm.

### Beispiel 12

### Herstellung von Anionenaustauschern und Überprüfung deren Mischbettverhaltens

Überprüft wurden Anionenaustauscher aus 5 % vernetztem Polymerisat, hergestellt nach den Beispielen 10 und 11.

### Chlormethylierung

In einem Vierhalskolben ausgerüstet mit Rührer, Kühler, Kontrollthermometer und Badheizung werden 250 ml Monochlordimethylether mit einem Eisen-3-chloridgehalt von 13,6 g/l vorgelegt. Anschließend werden unter Rühren 50 g Polymerisat dosiert und innerhalb von 3 h auf 50°C geheizt und weitere 6 h bei 53-55°C gehalten. Nach Abkühlung auf Raumtemperatur wird der überschüsssige Monochlordimethylether langsam mit 250 ml Methanol zersetzt. Danach wird auf der Fritte getrennt und das Produkt mit Methylol und 3-4 Methanolwäschen gewaschen.

### Ergebnisse:

| **Versuch** | **Polymerisat** | **Ausbeute in ml** | **Chlorwert in %** |
|---|---|---|---|
| A | Aus Beispiel 11 | 120 | 20,9 |
| B | Aus Beispiel 10 | 116 | 19,7 |

### Aminierung:

In einem Laborautoklav ausgerüstet mit Rührer und Mantelheizung werden 600 ml Wasser, 150 ml Trimethylamin (50 %ig) und 25 g Natriumchlorid vorgelegt. Das abgesaugte chlormethylierte Polymer wird in den Autoklaven überführt. In 1,5 h wird auf 50°C geheizt und 10 h bei dieser Temperatur gehalten. Nach Abkühlung wird in einen Überschuß an 5 %ige Salzsäure überführt und nach 4 h mit Wasser bis zur Neutralität ausgewaschen.

Das zum Vergleich eingesetzte Polymerisat wurde nach gleicher Vorschrift chlormethyliert und aminiert.

### Mischbettperformance-Test:

Die Mischbett-Performance der erhaltenen Anionenaustauscher wurde wie folgt getestet:

100 ml einer Mischung aus 60 Vol.-% erfindungsgemäß hergestelltem Anionenaustauscher in der OH-Form und 40 Vol.-% Lexatit® Monoplus S 100 in der H-Form wurden 14 Stunden intensiv auf einem Schütteltisch gemischt und dann in einer Säure mit Deionat bzw. verdünnten Salzlösungen bei einer Belastung von 200 BV/h in folgender Reihenfolge beaufschlagt (BV = Bettvolumen).

| | |
|---|---|
| 10 min Deionat | (ca. 0,06 µS/cm) |
| 5 min Natriumchloridlösung 5 min Deionat | (1 ppm) |
| 5 min Calciumchloridlösung 5 min Deionat | (2,5 ppm) |
| 5 min Natriumsulfatlösung | (2,5 ppm) |

Die Leitfähigkeit am Ausgang der Säule wurde kontinuierlich gemessen, und die maximalen Leitfähigkeitswerte für die jeweiligen Salzlösungen erfasst und summiert. Je besser die Mischbettperformance der Harzmischung ist, desto geringer ist die Leitfähigkeitssumme am Ausgang der Säule (im Minimum 3 X 0,06 µS/cm Deionatqualität).

Im ungünstigsten Fall eines völlig inerten Verhaltens der Harzmischung würde eine Leitfähigkeit von ca. 20 µS/cm am Säulenausgang resultieren.

### Ergebnisse:

| **Versuch** | **Polymerisat** | **Summe Leitfähigkeitspeaks (µmS/cm)** (nach 14 h) |
|---|---|---|
| A | Aus Beispiel 11 | 0,39 |
| B | Aus Beispiel 10 | 0,18 |

Während beim Versuch B bei allen dosierten Salzlösungen die eingebrachten Salzionen von der Harzmischung gegen OH- bzw. H-Ionen ausgetauscht wurden und die Leitfähigkeit somit am Ausgang der Säule optimale Deionatqualität besaß, wurden bei Versuch A nicht alle Salzionen von der Harzmischung aufgenommen und am Säulenausgang noch eine beträchtliche Restleitfähigkeit beobachtet.

## Patentansprüche

1. Verfahren zur Herstellung nicht-mikroverkapselter monodisperser Perlpolymerisate, **dadurch gekennzeichnet, dass** man
a) eine wässrige Suspension aus
i) mikroverkapselten monodispersen Monomertröpfchen enthaltend Monomer, Vernetzer und Radikalbildner und
ii) Dispergiermittel
herstellt,
b) die Polymerisation durch Temperaturerhöhung auf Temperaturen, bei denen der Radikalbildner aktiv ist, einleitet,
c) bis zu einem Polymerisationsumsatz von 20 bis 98 % polymerisiert,
d) starke Säuren oder starke Laugen zugibt,
e) die Polymerisation vervollständigt und
f) das entstandene nicht-mikroverkapselte monodisperse Perlpolymerisat isoliert.

2. Verfahren nach Anspruch 1, **dadurch gekennzeichnet, dass** die Monomertröpfchen mit einer Gelatine enthaltenden Kapselwand mikroverkapselt sind.

3. Verfahren nach Anspruch 1 oder 2, **dadurch gekennzeichnet, dass** die Zugabe von starken Säuren oder starken Laugen bei einem Polymerisationsumsatz von 20 bis 98 % erfolgt.

4. Verfahren nach Anspruch 1 bis 3, **dadurch gekennzeichnet, dass** als starke Lauge Natriumhydroxid verwendet wird.

5. Verfahren nach Anspruch 4, **dadurch gekennzeichnet, dass** das Natriumhydroxid in einer solchen Menge eingesetzt wird, dass die Konzentration an Natriumhydroxid in der wässrigen Phase 0,1 bis 5 Gew.-% beträgt.

6. Verfahren gemäß den Ansprüchen 1 bis 5, **dadurch gekennzeichnet, dass** die mikroverkapselten Monomertröpfchen im Wesentlichen aus Styrol und Divinylbenzol bestehen.

7. Verfahren gemäß den Ansprüchen 1 bis 6, **dadurch gekennzeichnet, dass** die mikroverkapselten monodispersen Monotröpfchen zusätzlich Porogen enthalten.

## Claims

1. Process for the preparation of non-microencapsulated monodisperse bead polymers, **characterized in that**
a) an aqueous suspension of
i) microencapsulated monodisperse monomer droplets containing monomer, crosslinking agent and free radical initiator and
ii) dispersant
is prepared,
b) the polymerization is initiated by increasing the temperature to temperatures at which the free radical initiator is active,
c) polymerization is effected to a polymerization conversion of 20 to 98%,
d) strong acids or strong alkalis are added,
e) the polymerization is completed and
f) the resulting non-microencapsulated monodisperse bead polymer is isolated.

2. Process according to Claim 1, **characterized in that** the monomer droplets are microencapsulated with a gelatin-containing capsule wall.

3. Process according to Claim 1 or 2, **characterized in that** the addition of strong acids or strong alkalis is effected at a polymerization conversion of 20 to 98%.

4. Process according to any of Claims 1 to 3, **characterized in that** the strong alkali used is sodium hydroxide.

5. Process according to Claim 4, **characterized in that** the sodium hydroxide is used in an amount such that the concentration of sodium hydroxide in the aqueous phase is 0.1 to 5% by weight.

6. Process according to any of Claims 1 to 5, **characterized in that** the microencapsulated monomer droplets substantially comprise styrene and divinylbenzene.

7. Process according to any of Claims 1 to 6, **characterized in that** the microencapsulated monodisperse monomer droplets additionally contain a porogen.

## Revendications

1. Procédé pour la préparation de polymères en perle monodispersés, non micro-encapsulés, **caractérisé en ce qu'**on
a) prépare une suspension aqueuse
i) de gouttes de monomère monodispersées, micro-encapsulées, contenant du monomère, un réticulant un agent de formation de radicaux et
ii) d'un dispersant,
b) démarre la polymérisation par augmentation de la température à des températures auxquelles l'agent de formation de radicaux est actif,
c) polymérise jusqu'à un rendement de polymérisation de 20 à 98%,
d) ajoute des acides forts ou des bases fortes,
e) complète la polymérisation et
f) isole le polymère en perle monodispersé, non micro-encapsulé formé.

2. Procédé selon la revendication 1, **caractérisé en ce que** les gouttes de monomère sont micro-encapsulées par une paroi de capsule contenant de la gélatine.

3. Procédé selon la revendication 1 ou 2, **caractérisé en ce que** l'addition d'acides forts ou de bases fortes est réalisée à un rendement de polymérisation de 20 à 98%.

4. Procédé selon la revendication 1 à 3, **caractérisé en ce qu'**on utilise comme base forte de l'hydroxyde de sodium.

5. Procédé selon la revendication 4, **caractérisé en ce qu'**on utilise de l'hydroxyde de sodium en une quantité telle que la concentration en hydroxyde de sodium dans la phase aqueuse est de 0,1 à 5% en poids.

6. Procédé selon les revendications 1 à 5, **caractérisé en ce que** les gouttes de monomère micro-encapsulées sont essentiellement constituées de styrène et de divinylbenzène.

7. Procédé selon les revendications 1 à 6, **caractérisé en ce que** les gouttes de monomère, monodispersées, micro-encapsulées contiennent en outre un agent porogène.
